# EUROPÄISCHE PATENTSCHRIFT

(11) **EP 1 177 607 B1**
(45) Veröffentlichungstag und Bekanntmachung des Hinweises auf die Patenterteilung: **04.03.2009**
(21) Anmeldenummer: 00941883.1
(22) Anmeldetag: 27.04.2000
(51) Int. Cl.: H02K 5/14, H02K 13/00, H01R 43/00, H01R 39/46

(54) **ELEKTRISCHE MASCHINE**
ELECTRIC MACHINE
MACHINE ELECTRIQUE

(30) Priorität: 10.05.1999 DE 19921375
(43) Veröffentlichungstag der Anmeldung: 06.02.2002
(73) Patentinhaber: Voith Siemens Hydro Power Generation GmbH & Co. KG, 89522 Heidenheim (DE)
(72) Erfinder: ZWARG, Günter, D-14052 Berlin (DE); BEISER, Frank, D-16552 Schildow (DE)
(74) Vertreter: Dr. Weitzel & Partner
(86) Internationale Anmeldenummer: PCT/DE2000/001316
(87) Internationale Veröffentlichungsnummer: WO 2000/069049

(56) Entgegenhaltungen:
- GB-A- 1 005 433
- US-A- 4 621 211
- PATENT ABSTRACTS OF JAPAN vol. 005, no. 176 (E-081), 12. November 1981 (1981-11-12) & JP 56 103951 A (TOSHIBA CORP), 19. August 1981 (1981-08-19)
- PATENT ABSTRACTS OF JAPAN vol. 1998, no. 01, 30. Januar 1998 (1998-01-30) & JP 09 247914 A (HITACHI KIDEN KOGYO LTD), 19. September 1997 (1997-09-19)
- PATENT ABSTRACTS OF JAPAN vol. 013, no. 317 (E-789), 19. Juli 1989 (1989-07-19) & JP 01 085549 A (TOSHIBA CORP;OTHERS: 01), 30. März 1989 (1989-03-30)

## Beschreibung

Die Erfindung betrifft eine elektrische Maschine mit einem Schleifring und einem Bürstenhalter.

Eine elektrische Maschine ist eine rotierende Maschine, die entweder als Generator mechanische Energie in elektrische Energie umwandelt, oder umgekehrt als Elektromotor elektrische Energie in mechanische Energie umwandelt. Die elektrische Maschine umfaßt einen sich drehenden Rotor und einen ruhenden Ständer. Der elektrische Kontakt zwischen Rotor und Ständer wird durch Bürsten hergestellt. Eine solche Bürste ist Bestandteil des Ständers. Sie vermittelt als federnd geführter Schleifkontakt den Stromübergang zu einem bewegten Maschinenteil des Rotors, wie Kollektor oder Schleifring. Eine Bürste ist in einem Bürstenhalter gelagert und ist in der Regel ein Preßkörper aus Kohle, Natur-, Elektro- oder Metallgraphit.

Eine Bürste wird beispielsweise durch eine Feder auf einen Schleifring der elektrischen Maschine gedrückt. Durch die Bewegung des Schleifrings wird die Bürste langsam abgerieben. Hierdurch wird der Preßkörper einige bis etliche µm pro Betriebsstunde kleiner. Das Material des Preßkörpers wird zu Staub zerrieben. Der Abrieb oder Bürstenstaub wird von der in der elektrischen Maschine befindlichen Luft von der Bürste weggetragen und verteilt sich in der näheren und weiteren Umgebung der Bürste. Hierbei setzt sich der Bürstenstaub als elektrisch leitfähige Schicht auf isolierende Teile der elektrischen Maschine und verursacht dort elektrische Überschläge. Der Bürstenstaub setzt sich auch auf bewegliche Teile und in Lager und verursacht dort einen erhöhten Reibungswiderstand.

Es sind zahlreiche elektrische Maschinen mit Schleifring und Bürsten bekannt. Nur beispielsweise wird auf die folgenden Dokumente verwiesen:
- D1 =: Patent Abstracts of Japan vol. 005, no. 176 (E-081), 12. November 1981 (1981-11-12) & JP 56 103951 A (Toshiba Corp), 19. August 1981 (1981-08-19)
- D2 =: GB-A-1 005 433 (English Electric Company) 22. September 1965 (1965-09-22)

D1 beschreibt eine Auffangvorrichtung zum Absaugen von Bürstenstaub zwischen einer Bürste zum Herstellen eines elektrischen Kontaktes zwischen Rotor und Stator einer elektrischen Maschine. Die Öffnung der Auffangvorrichtung befindet sich - im Umlaufsinne gesehen - hinter der Bürste im Bereich eines KontaktElementes der Bürste und eines Schleifringes. Der Staub wird einer Staubsammelkammer zugeführt. Dabei geht es um das Erfassen der Lebensdauer sowie des Verschleißes der Bürste.

D2 beschreibt eine Auffangvorrichtung, bei welcher nur Jener Bürstenstaub effizient aufgefangen wird, der sich in Drehrichtung des Schleifringes bewegt. Teilmengen von Bürstenstaub, die sich seitlich der Drehrichtung bewegen, werden jedoch nicht aufgefangen.

Der Erfindung liegt die Aufgabe zugrunde, eine elektrische Maschine mit einem Schleifring und einer Bürste derart zu gestalten, dass die Effizienz der aus D2 bekannten Bürstenstaub-Auffangvorrichtung verbessert wird.

Diese Aufgabe wird durch die Merkmale des Patentanspruchs gelöst.

Demgemäß ist der Bürstenhalter beziehungsweise ist die Bürstenhaltergruppe in den Staubauffangkopf integriert. Der Staubauffangkopf umschlleßt den Bürstenhalter beziehungsweise die Bilrstenhaltergruppe daher vollständig oder weitgehend vollständig. Deshalb wird auch jener Bürstenstaub aufgefangen, der sich seitlich gegenüber der Drehrichtung des Schleifrings bewegt, so dass die Effizienz der Auffangvorrichtung deutlich gesteigert wird.

Die Erfindung ist anhand der Zeichnung näher erläutert. Darin ist im Einzelnen Folgendes dargestellt:
FIG 1 eine Seitenansicht auf einen Staubauffangkopf und einen Bürstenhalter;
FIG 2 eine perspektivische Ansicht auf einen Staubauffangkopf und einen Bürstenhalter;
FIG 3 einen Staubauffangkopf und einen Bürstenhalter als eine kompakte Baueinheit;
FIG 4 eine schematische Darstellung einer Bürstenstaubauffanganlage;

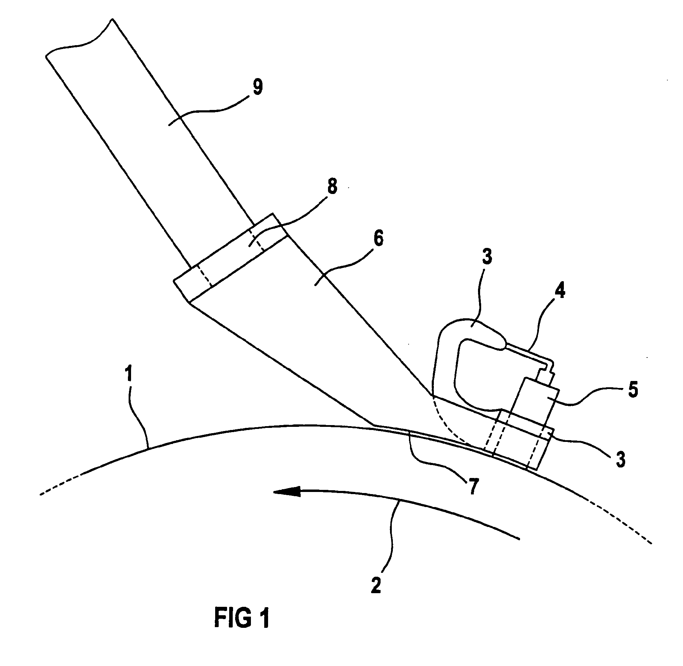

In Figur 1 ist ein Schleifring 1 einer elektrischen Maschine dargestellt, der im Betrieb der elektrischen Maschine in Drehrichtung 2 rotiert. Dicht am Schleifring ist ein am Ständer befestigter Bürstenhalter 3 angeordnet, dessen Stahlfeder 4 eine aus Preßkohle bestehende Bürste 5 an den Schleifring 1 drückt. In unmittelbarer Nähe zum Schleifring 1 ist ein Staubauffangkopf 6 einer Bürstenstaubauffangvorrichtung angeordnet. Die Einlaßöffnung 7 des Staubauffangkopfes, die zum Schleifring 1 gerichtet ist, ist in Figur 1 nicht als Öffnung sichtbar und nur als Strich dargestellt. Der Staubauffangkopf 6 weist eine Auslaßöffnung 8 auf, durch die Luft aus dem Inneren des Staubauffangkopfes 6 in ein Rohr 9 der Bürstenstaubauffangvorrichtung strömen kann. Die Luft wird durch einen in Figur 1 nicht dargestellten Absaugventilator der Bürstenstaubauffangvorrichtung vom Staubauffangkopf 6 in das Rohr 9 gesaugt.

Während des Betriebs der elektrischen Maschine wird vom Schleifring 1 Bürstenstaub von der Bürste 5 abgerieben. Dieser Bürstenstaub wird von Luft, die vom Schleifring 1 mitgerissen wird, in Drehrichtung 2 zur Einlaßöffnung 7 des Staubauffangkopfes 6 getragen. Durch den vom Absaugventilator erzeugten Unterdruck im Staubauffangkopf 6 der Bürstenstaubauffangvorrichtung wird die staubtragende Luft daran gehindert, den Staubauffangkopf 6 zu verlassen. Sie wird durch die Einlaßöffnung 7 in den Staubauffangkopf 6 und weiter in das Rohr 9 gesogen.

Der Bürstenstaub wird somit direkt am Entstehungsort mittels des als Saugdüse fungierenden Staubauffangkopfes 6 abgesaugt. Da der Staubauffangkopf 6 in tangentialer Richtung zum Schleifring angeordnet ist, wird der Bürstenstaub in Richtung zur Einlaßöffnung transportiert. Er kann auch nicht aus dem Bereich um die Einlaßöffnung 7 in den Raum um den Schleifring 1 entweichen, da er in den Staubauffangkopf 6 eingesogen wird. Auf diese Weise wird nahezu der gesamte beim Bürstenhalter 3 erzeugte Bürstenstaub von der Bürstenstaubauffangvorrichtung aufgenommen und an einen dafür vorgesehenen Ort innerhalb der Bürstenstaubauffangvorrichtung transportiert.

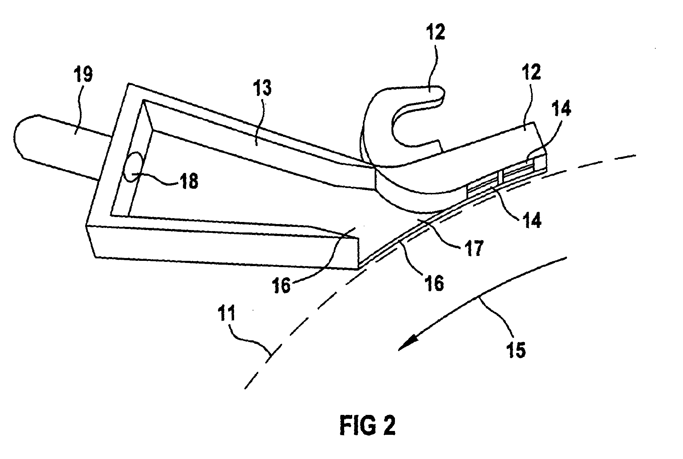

Figur 2 zeigt in perspektivischer Darstellung eine an einem Schleifring 11 angeordnete Kombination von Bürstenhalter 12 und Staubauffangkopf 13. Der Schleifring 11 selber ist nicht dargestellt. Seine Position ist lediglich durch eine gestrichelte Linie angedeutet. Die in Figur 2 nicht dargestellten Bürsten liegen während des Betriebs der elektrischen Maschine in Schächten 14 des Bürstenhalters 12. In Nachbarschaft zum Bürstenhalter 12 und in unmittelbarer Nähe zum Schleifring 11 ist ein Staubauffangkopf 13 einer Bürstenstaubauffangvorrichtung angeordnet. Der Staubauffangkopf 13 ist ohne Deckel dargestellt, so daß der Innenraum des Staubauffangkopfes 13 sichtbar ist. Während des Betriebs der elektrischen Maschine verschließt der Deckel den Innenraum des Staubauffangkopfes 13. Die Vorderkante des Deckels kommt dabei an der Vorderkante des Bürstenhalters 12 zu liegen. Vorne und Hinten des Bürstenhalters 12 wird von der Drehrichtung 15 des Schleifrings 11 bestimmt. Die dem Deckel gegenüberliegende Rückwand 16 des Staubauffangkopfes 13 ist symmetrisch zum Deckel angeordnet. Zusammen mit dem Deckel bildet sie ein Mittel, das den Bürstenstaub zur Einlaßöffnung 17 lenkt.

Während des Betriebs der elektrischen Maschine wird der beim Bürstenhalter 12 erzeugte Bürstenstaub von der durch den um eine vertikale Rotationsachse rotierenden Schleifring 11 mitgerissenen Luft zur Einlaßöffnung 17 des Staubauffangkopfes 13 getragen. Sie wird von dort durch - von einem in der Figur 2 nicht dargestellten Ventilator der Bürstenstaubauffangvorrichtung erzeugten Unterdruck - in den Staubauffangkopf 13 und weiter durch die Auslaßöffnung 18 in ein Rohr 19 der Bürstenstaubauffangvorrichtung gesogen. Der Staubauffangkopf 13 ist so ausgestaltet, daß - auch bei Ausfall des Absaugventilators - die Kühlung des Bürstenhalters 12 und des Schleifrings 11 praktisch nicht beeinträchtigt wird.

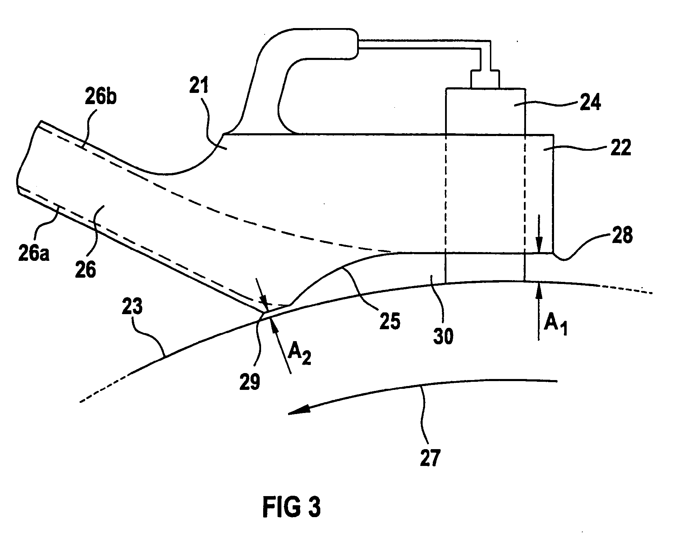

Der in Figur 3 dargestellte Staubauffangkopf 21 der Bürstenstaubauffangvorrichtung einer elektrischen Maschine bildet mit einem Bürstenhalter 22 der elektrischen Maschine eine kompakte Baueinheit. Der Staubauffangkopf 21 ist in den Bürstenhalter 22 integriert. Der durch das Reiben des Schleifrings 23 erzeugte Abrieb der Bürste 24 wird als Bürstenstaub zur Einlaßöffnung 25 des Staubauffangkopfes 21 getragen. Der Staub wird von dort durch einen rohrförmigen Innenraum 26 des Staubauffangkopfes 21 zu einem weiteren Bauteil der Bürstenstaubauffangvorrichtung transportiert. Der Innenraum 26 des Staubauffangkopfes 21 ist durch gestrichelte Linien 26a und 26b dargestellt.

Der Abstand A₁ zwischen Schleifring 23 und der - in Drehrichtung 27 des Schleifrings 23 gesehen - vorderen Kante 28 des Staubauffangkopfes 21 ist größer ist als der Abstand A₂ zwischen Schleifring 23 und der hinteren Kante 29 des Staubauffangkopfes. Die vordere Kante 28 des Staubauffangkopfes 21 ist gleichzeitig auch die vordere Kante 28 des Bürstenhalters 22. Durch den verhältnismäßig großen Abstand A₁ zwischen Schleifring 23 und Staubauffangkopf 21 kann während des Betriebs der elektrischen Maschine viel Luft, die vom Schleifring mitgerissen wird, in den Raum 30 zwischen Staubauffangkopf 21 und Schleifring 23 gelangen. Diese Luft kann nur zu einem geringen Teil durch den schmalen Spalt zwischen hinterer Kante 29 des Staubauffangkopfes 21 und Schleifring 23 den Raum 30 verlassen. Der weitaus größere Teil der Luft drückt durch seine Eigenbewegung in die Einlaßöffnung 25 des Staubauffangkopfes 21 und bewirkt somit einen Transport des Bürstenstaubs durch den Innenraum 26 des Staubauffangkopfes 21 zu einem weiteren Bauteil der Bürstenstaubauffangvorrichtung.

Bei diesem Ausführungsbeispiel der Erfindung wird nahezu der gesamte beim Bürstenhalter 22 erzeugte Bürstenstaub vom Staubauffangkopf 21 aufgenommen und gelangt somit nicht mehr an unerwünschte Stellen innerhalb der elektrischen Maschine.

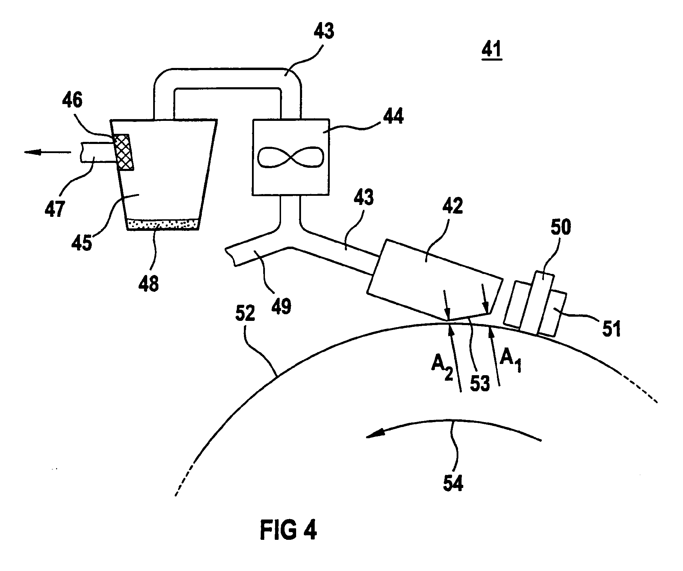

Figur 4 zeigt in schematischer Darstellung eine Bürstenstaubauffangvorrichtung 41. Sie umfaßt einen Staubauffangkopf 42, ein Schlauchsystem 43, das den Staubauffangkopf 42 mit einem Ventilator 44 und weiter mit einem Auffangbehälter 45 verbindet. Im Auffangbehälter 45 ist ein Filter 46 angeordnet, der Bürstenstaub aus der den Filter 46 durchströmenden Luft ausfiltert. Der Bürstenstaub 48 sammelt sich im Auffangbehälter 45. An den Auffangbehälter 45 schließt sich ein Rohrsystem 47 an, das die Luft aus der Bürstenstaubauffangvorrichtung 41 hinausleitet. Im Schlauchsystem 43 ist ein Abzweig angeordnet, der durch einen Schlauch 49 mit einem weiteren Staubauffangkopf der Bürstenstaubauffangvorrichtung 41 verbunden wird. Jedem Bürstenhalter der elektrischen Maschine ist ein Staubauffangkopf der Bürstenstaubauffangvorrichtung 41 zugeordnet.

Der von der Bürste 50 des Bürstenhalters 51 vom Schleifring 52 abgeriebene Bürstenstaub wird durch den Ventilator 44 in die Einlaßöffnung 53 des Staubauffangkopfes 42 gesogen. Zur Verstärkung des Luftstroms in den Staubauffangkopf 42 ist der Staubauffangkopf 42 so gestaltet, daß der Abstand A₁ zwischen Schleifring 52 und der vorderen Kante des Staubauffangkopfes 42 größer ist als der Abstand A₂ zwischen Schleifring 52 und der hinteren Kante des Staubauffangkopfes 42. Vorne und hinten wird durch die Drehrichtung 54 des Schleifrings 52 bestimmt.

## Patentansprüche

1. Elektrische Maschine;
1.1 mit einem Schleifring (1, 11, 23, 52) und einer Bürste (5, 24, 50) zum Herstellen eines elektrischen Kontaktes zwischen Rotor und Stator der elektrischen Maschine, ferner mit einem Bürstenhalter (3, 12, 22, 51);
1.2 mit einer Bürstenstaubauffangvorrichtung (41), die einen Staubauffangkopf (6, 13, 21, 42) zum Absaugen von Bürstenstaub (48) umfasst;
1.3 der Staubauffangkopf (6, 13, 21, 42) umfasst eine Einlassöffnung (7, 17, 25, 53), die in Drehrichtung des Schleifringes (1, 11, 23, 52) gesehen unmittelbar hinter dem Bürstenhalter (3,12,22. 51) angeordnet ist;
1.4 der Staubauffangkopf (21) und der Bürstenhalter (22) bilden eine kompakte Baueinheit miteinander;
1.5 der Staubauffangkopf (21) ist in den Bürstenhalter (22) integriert;
1.6 der Staubauffangkopf (6, 13, 21, 42) umschließt den Bürstenhalter (3, 12, 22, 51) vollständig oder weitgehend vollständig.

2. Elektrische Maschine nach Anspruch 1, **dadurch gekennzeichnet, dass** der Staubauffangkopf (6,13, 21, 42) in unmittelbarer Nähe zum Schleifring (1, 11, 23, 52) angeordnet ist.

3. Elektrische Maschine nach Anspruch 1 und 2, **dadurch gekennzeichnet, dass** der Staubauffangkopf (6, 13, 21, 42) Mittel wie beispielsweise einen Absaugventilator (44) oder eine mit einem Deckel des Staubauffangkopfes (13) zusammenwirkende und diesem gegenüberliegende Rückwand (16) umfasst, die den Bürstenstaub (48) zur Einlassöffnung (7, 17, 25, 53) tragen.

4. Elektrische Maschine nach einem der Ansprüche 1 bis 3, **dadurch gekennzeichnet, dass** der Abstand A1 zwischen dem Schleifring (23, 52) und der, in Drehrichtung (27, 54) des Schleifringes (23, 52) gesehen, vorderen Kante (28) des Staubauffangkopfes (21, 42) größer ist als der Abstand A2 zwischen dem Schleifring (23, 52) und der hinteren Kante (29) des Staubauffangkopfes (21, 42).

5. Elektrische Maschine nach einem der Ansprüche 1 bis 4, **dadurch gekennzeichnet, dass** die Bürstenstaubauffangvorrichtung (41) einen Auffangbehälter (45) für den Bürstenstaub (48) und ein Schlauchsystem (43), welches den Staubauffangkopf (42) mit dem Absaugventilator (44) und dem Auffangbehälter (45) verwendet sowie ein Rohrsystem (47) umfasst, das sich an den Auffangbehälter (45) anschließt.

6. Elektrische Maschine nach einem der Ansprüche 1 bis 5, **dadurch gekennzeichnet, dass** der Staubauffangkopf (6, 13) eine Auslassöffnung (8, 18) sowie ein Rohr (9, 19) der Bürstenstaubauffangvordchtung (41) aufweist, durch welches Luft aus dem Inneren des Staubauffangkopfes (6, 13) strömen kann,

7. Elektrische Maschine nach einem der Ansprüche 1 bis 6, **dadurch gekennzeichnet, dass** die Bürstenataubauffangvorrichtung (41) einen Filter (46) umfasst, der geeignet ist, den Bürstenstaub (48) Im Auffangbehälter (45) zurückzuhalten.

8. Elektrische Maschine nach einem der Ansprüche 1 bis 7, **dadurch gekennzeichnet, dass** der Schleifring (1, 11) im Betrieb um eine vertikale Rotationsachse rotiert,

## Claims

1. An electric machine,
with a collector ring (1, 11, 23, 52) and a brush (5, 24, 50) for producing an electric contact between rotor and stator of the electric machine, further a brush holder (3, 12, 22, 51);
with brush dust collecting apparatus (41) which comprises a dust collecting head (6, 13, 21, 42) for removing brush dust (48) by suction;
the dust collecting head (6, 13, 21, 42) comprises an inlet opening (7, 17, 25, 53) which is arranged directly behind the brush holder (3, 12, 22, 51) as seen in the direction of rotation of the collector ring (1, 11, 23, 52);
the dust collecting head (21) and the brush holder (22) form a compact modular unit together;
the dust collecting head (21) is integrated in the brush holder (22);
the dust collecting head (6, 13, 21, 42) encloses the brush holder (3, 12, 22, 51) either completely or substantially completely.

2. An electric machine according to claim 1, **characterized in that** the dust collecting head (6, 13, 21, 42) is arranged in the direct vicinity of the collector ring (1, 11, 23, 52).

3. An electric machine according to claim 1 and 2, **characterized in that** the dust collecting head (6, 13, 21, 42) comprises means such as a suction fan (44) or a rear wall (16) which cooperates with a cover of the dust collecting head (13) and is opposite of the same, and which carry the brush dust (48) to the inlet opening (7, 17, 25, 53).

4. An electric machine according to one of the claims 1 to 3, **characterized in that** the distance A1 between the collector ring (23, 52) and, as seen in the direction of the rotation (27, 54) of the collector ring (23, 52), front edge (28) of the dust collecting head (21, 42) is larger than the distance A2 between the collector ring (23, 52) and the rear edge (29) of the dust collecting head (21,42).

5. An electric machine according to one of the claims 1 to 4, **characterized in that** the brush dust collecting apparatus (41) comprises a collecting container (45) for the brush dust (48) and a tube system (43) which uses the dust collecting head (42) with the suction fan (44) and the collecting container (45), as well as a pipe system (47) which is connected to the collecting container (45).

6. An electric machine according to one of the claims 1 to 5, **characterized in that** the dust collecting head (6, 13) comprises an outlet opening (8, 18) as well as a pipe (9, 19) of the brush dust collecting apparatus (41), through which air can flow from the interior of the dust collecting head (6, 13).

7. An electric machine according to one of the claims 1 to 6, **characterized in that** the brush dust collecting apparatus (41) comprises a filter (46) which is capable of holding back the brush dust (48) in the collecting container (45).

8. An electric machine according to one of the claims 1 to 7, **characterized in that** the collector ring (1, 11) rotates about a vertical rotational axis during operation.

## Revendications

1. Machine électrique,
1.1 avec une bague collectrice (1, 11, 23, 52) et un balai (5, 24, 50) pour établir un contact électrique entre le rotor et le stator de la machine électrique, et avec un porte-balai (3, 12, 22, 51) ;
1.2 avec un dispositif collecteur de poussière de balai (41) comprenant une tête collectrice de poussière (6, 13, 21, 42) destinée à aspirer la poussière de balai (48) ;
1.3 la tête collectrice de poussière (6, 13, 21, 42) comprend une ouverture d'entrée (7, 17, 25, 53), disposée, vue dans le sens de rotation de la bague collectrice (1, 11, 23, 52), immédiatement après le porte-balai (3, 12, 22, 51) ;
1.4 la tête collectrice de poussière (21) et le porte-balai (22) forment ensemble une unité de construction compacte ;
1.5 la tête collectrice de poussière (21) est intégrée dans le porte-balai (22) ;
1.6 la tête collectrice de poussière (6, 13, 21, 42) entoure complètement ou dans une grande mesure le porte-balai (3, 12, 22, 51).

2. Machine électrique selon la revendication 1, **caractérisée en ce que** la tête collectrice de poussière (6, 13, 21, 42) est disposée à proximité immédiate de la bague collectrice (1, 11, 23, 52).

3. Machine électrique selon les revendications 1 et 2, **caractérisée en ce que** la tête collectrice de poussière (6, 13, 21, 42) comprend des moyens tels qu'un ventilateur d'aspiration (44), par exemple, ou une paroi arrière (16) coopérant avec un couvercle de la tête collectrice de poussière (13) et faisant face à celle-ci, qui amènent la poussière de balai (48) vers l'ouverture d'entrée (7, 17, 25, 53).

4. Machine électrique selon l'une des revendications 1 à 3, **caractérisée en ce que** la distance A1 entre la bague collectrice (23, 52) et le bord antérieur (28), dans le sens de rotation (27, 54) de la bague collectrice (23, 52), de la tête collectrice de poussière (21, 42) est plus grande que la distance A2 entre la bague collectrice (23, 52) et le bord arrière (29) de la tête collectrice de poussière (21, 42).

5. Machine électrique selon l'une des revendications 1 à 4, **caractérisée en ce que** le dispositif collecteur de poussière de balai (41) comprend un récipient collecteur (45) pour la poussière de balai (48) et un système de flexibles (43) qui relie la tête collectrice de poussière (42) au ventilateur d'aspiration (44) et au récipient collecteur (45) ainsi qu'un système de tuyaux (47) qui se raccorde au récipient collecteur (45).

6. Machine électrique selon l'une des revendications 1 à 5, **caractérisée en ce que** la tête collectrice de poussière (6, 13) possède une ouverture de sortie (8, 18) ainsi qu'un tuyau (9, 19) du dispositif collecteur de poussière de balai (41) par lequel de l'air peut être amené depuis l'intérieur de la tête collectrice de poussière (6, 13).

7. Machine électrique selon l'une des revendications 1 à 6, **caractérisée en ce que** le dispositif collecteur de poussière de balai (41) comprend un filtre (46) qui convient pour retenir la poussière de balai (48) dans le récipient collecteur (45).

8. Machine électrique selon l'une des revendications 1 à 7, **caractérisée en ce que** la bague collectrice (1, 11) tourne, pendant le fonctionnement, autour d'un axe de rotation vertical.
